# EUROPEAN PATENT SPECIFICATION

(11) **EP 1 353 212 B1**
(45) Date of publication and mention of the grant of the patent: **07.06.2006**
(21) Application number: 03007318.3
(22) Date of filing: 31.03.2003
(51) Int. Cl.: G02B 21/24, G02B 21/36

(54) **Microscope apparatus**
Mikroskop
Microscope

(30) Priority: 29.03.2002 JP 2002097497; 29.03.2002 JP 2002097498; 29.03.2002 JP 2002097499
(43) Date of publication of application: 15.10.2003
(73) Proprietor: National Institute of Radiological Sciences, Chiba-shi, Chiba-ken 263-8555 (JP); SEIKO PRECISION INC., Narashino-shi, Chiba-ken (JP)
(72) Inventor: Yasuda, Nakahiro, National Institute, Inage-ku, Chiba-shi, Chiba-ken, 263-8555 (JP); Honma, Yoshihiro, Narashino-shi, Chiba-ken (JP)
(74) Representative: Grünecker, Kinkeldey, Stockmair & Schwanhäusser Anwaltssozietät

(56) References cited:
- WO-A-00/43820
- US-A- 5 288 987
- PATENT ABSTRACTS OF JAPAN vol. 2000, no. 12, 3 January 2001 (2001-01-03) & JP 2000 266995 A (HITACHI DENSHI LTD), 29 September 2000 (2000-09-29) & US 6 444 967 B1 (S. KOSUGE ET AL) 3 September 2002 (2002-09-03)

## Description

The present invention relates to a microscope apparatus for examining a radiation exposure amount of neutrons or the like, cellular tissue or the like in the hospital or laboratory, and more particularly to a microscope apparatus for imaging an sample by a line sensor.

### [Prior Art]

In recent years, increased are the facilities where radiation is given off, including hospitals radiotherapy and atomic power plants. There is an increased necessity to measure the personal exposure for the person engaged in such locations. In the meanwhile, conventionally, concerning personal exposure measurement, there is a proposal of means that a sample is attached on a coat or the like to make a measurement on a radiation incident amount or incident direction recorded on the sample, as disclosed in JP-A-11-174157, JP-A-2001-42038, etc. The measuring means is generally as follows.

The sample of an organic plastic or the like, if passed by a radiation, suffers damage in molecular bonds. The damaged part, if etched with a predetermined solution, produces fine etch pits. The etch pits are different in shape depending upon a radiation incident amount or incident direction. Accordingly, by examining and totalizing the forms of etch pits caused on the sample by the microscope, measurement can be made for radiation incident amount and incident direction.
Meanwhile, in the medical institution such as a hospital or university laboratory, frequently conducted are cellular tissue examinations of cancerous cells and the like by the microscopes.
In the meanwhile, it is possible to visually conduct examination, determination or the like on etch pit form, cellular tissue or the like while viewing the microscope. However, it requires huge labor and burden to conduct examination, determination or the like on a multiplicity of samples. Furthermore, variation can occur in examination or determination result or the like due to the individual difference between the persons who conduct examination, determination or the like. For this reason, it can be considered for a means that what is called a two-dimensional CCD camera is attached on a microscope so that the image taken by the charge coupled device (hereinafter referred to be "CCD") sensor is displayed on a computer screen to conduct examination of radiation incident amount and incident direction or cellular tissue. Also, it can be considered for a means that, using image processing means, determination of radiation incident amount or incident direction, or determination of a range, advancing situation or the like of cancerous cells, etc. is automatically done from the image taken by the microscope.

Prior art document WO 00/43820 discloses an apparatus for continuous volume imaging a specimen using imaging a plurality of image planes at predetermined focal depths. The focal depth of each image plane is adjustable in accordance with a variety of desired spatial configurations. The images generated at the image planes are processed in parallel and the image corresponding to an optimal focal depth at the specimen location is selected for imaging the specimen at that location.

### [Problem that the Invention is to Solve]

However, the CCD sensor used on the conventional CCD camera uses a planar arrangement as a two-dimensional one having vertically and horizontally 600 pieces each, i.e. 3.5 billion, charge coupled devices having one side of 21 micrometers for example. Accordingly, in the case of taking an image with a magnification of ×30 for example, it is possible to take, at one time, an image only in a range of 21 micrometers × 600 places + 30 = 0.42 millimeter square.

Consequently, there is a need to repeat imaging of the sample as a subject while moving the 0.42-millimeter-squared imaging range sequentially from an end thereof. In the meanwhile, in order to obtain a clear image screen, there is a necessity to take an image by stopping the sample each time of movement based on one screen. It takes much time in order to take an image of samples within a predetermined region. Furthermore, in order to obtain a clear image screen, there is a need to correctly set a focal length for each image. Consequently, it can be considered to use a two-dimensional CCD sensor and automatically set a focal length as in the usual CCD camera. However, there is the following problem in such focal-length automatic setting means. Namely, the focal adjustment on the usual CCD camera using a two-dimensional CCD sensor is set at a focal position where the taken image is the sharpest, i.e. exhibits intense contrast, as an in-focus position. Accordingly, to carry out focal adjustment with the two-dimensional CCD sensor, for searching the greatest contrast point, requires to examine a maximum contrast value by examining around a focal point. Namely, because of necessity to examine also around a focal point, there is a disadvantage of taking time in focal adjustment.

Meanwhile, for obtaining a clear image, there is a necessity to accurately and swiftly adjust three factors, that is, both inclinations in X and Y directions and average focal length. The focus automatic adjustment on the conventional microscope apparatus is made by driving the objective lens by a motor or the like, or by focus adjusting drive means wherein two kinds of drive means of inclination adjusting drive means and focus adjusting drive means are provided on the support base. Also, in the case of imaging a sample, there is a need to take an image by setting a particular range in the sample. Namely, the size often differs depending on a sample, there is a need to take an image within the range not jutting out of a periphery of the sample whenever changing the sample. Consequently, there is a necessity to set a start point 11a and end point 11b of an imaging range before taking an image. Furthermore, where taking an image of a cellular tissue such as cancerous cells, a part or the like of the sample where the cell exists must be selected to set an image range.

Accordingly, it is an object of the present invention to provide a microscope apparatus capable of swiftly and accurately taking an image within a predetermined range of a sample in an examination or the like on radiation incident amount or cellular tissue or the like.

### [Means for Solving the Problem]

In order to solve the above problem, a first feature of a microscope apparatus according to the present invention lies in comprising: a microscope for imaging a sample by a line sensor; image processing means for making an image of the sample from a line image taken by the line sensor; wherein the microscope has focusing means having light-projecting means; the focusing means providing a projection position on the sample in a vicinity of a range to be imaged by the line sensor.

Herein, the sample means a track-detecting solid matter for measuring a radiation incident amount or incident direction or cellular tissue for examining cancerous cells or the like. However, these are not limited to, but included are all of those for examining or measuring a particular range by the microscope. Also, the line sensor means a sensor comprising a linear arrangement, for example, of several thousands of single charge coupled devices in one column. However, single one is not limitative, but included are those in a linear arrangement of a plurality, or nearly two to ten, of charge coupled devices. Also, the image processing means signifies a means of a known art wherein individual line images taken by the line sensor are superposed one over another to prepare an image in a predetermined range of a sample or compare/collate them. The focusing means having a light-projecting means signifies means of a known art wherein, for example, a circular laser spot is projected onto a sample to measure a deviation from a proper focal length from a deformation of a reflection light form thereof.

A second feature of a microscope apparatus according to the invention lies in that the projection position as described in the first feature is a forward position of the line sensor.
By thus structuring the invention, in the case of sequentially taking images over a sample measuring range by the line sensor, it is possible to previously measure and adjust a focal length of the subject of imaging. Furthermore, the projection light of the light projecting means is positively prevented from being incident on a line image.

A third feature of a microscope apparatus of the invention lies in that the projection means as described in the first feature has a forward light projecting means for projecting light to a forward position of the line sensor and a backward light projecting means for projecting light to a backward position of the line sensor.
Herein, the forward position of the line sensor signifies a moving-sided position of an imaging range of line sensor in horizontal movement, while the backward position of the line sensor signifies a reverse-sided position to the moving direction of an imaging range of line sensor in horizontal movement.

By thus structuring, where sequentially imaging by the line sensor while moving the sample, even if the moving direction is changed, for example, from left to right and then right to left thereby carrying out two-way scanning, it is possible to previously measure and adjust a focal length of a subject of imaging by the line sensor. Furthermore, the projection light by the light projecting means is positively prevented from being incident on a line image.

A fourth feature of a microscope apparatus according to the invention lies in comprising: a support base for supporting a sample; a microscope for magnifying the sample; a line sensor for imaging the magnified sample as a line image; and image processing means for making an image of the sample from a line image taken by the line sensor; the support base having adjusting means for adjusting an inclination thereof and a focal length of the microscope.

A fifth feature of a microscope apparatus according to the invention lies in that the adjusting means as described in the fourth feature adjusts vertical positions at least three points of the support base.
By thus structuring the invention, it is possible to easily adjust the inclination and focal length of the sample.

A sixth feature of a microscope apparatus according to the invention lies in that the adjusting means as described in either of the above feature 4 or 5 is controlled by a signal from the focusing means.
By thus structuring the invention, it is possible to accurately and swiftly adjust the inclination and focal length of the sample.

A seventh feature of a microscope apparatus according to the invention lies in comprising: a microscope for magnifying a sample; a line sensor for imaging the magnified sample as a line image; a two-dimensional charge coupled device for imaging an imaging position of the line sensor; and image processing means for making an image of the sample from a line image taken by the line sensor.
By this structure, the following operational effect is obtained. By imaging the sample with using the line sensor, sample imaging can be swiftly done. By using a two-dimensional CCD sensor capable of imaging two-dimensional spread, it is possible to swiftly and easily set an imaging region in the sample.

Namely, although it can be considered to set an in-sample imaging region from an image taken by the line sensor, the imaging range of the line sensor is extremely narrow in width as hereinafter referred. Accordingly, in a track-detecting solid matter for measuring a radiation incident amount or the like, it is extremely difficult to set a measuring range not jutting out of an periphery of the track-detecting solid matter while confirming a peripheral part. Also, in an examination of a cellular tissue or the like, it is difficult to confirm a particular location or range where cancerous cells or the like exist. On the other hand, in case a two-dimensional CCD sensor capable of imaging a two-dimensional spread, it is easy to confirm a peripheral part of a track-detecting solid matter or a particular location or range of a cellular tissue or the like. Consequently, in the invention, the provision of a two-dimensional CCD sensor in addition to the line sensor allows for swift and easy setting of an in-sample imaging range.

### [Brief Description of the Drawings]

[Fig. 1]
   A partial side view of a microscope apparatus.
[Fig. 2]
   A front view of the microscope apparatus.
[Fig. 3]
   A schematic configuration diagram of focusing means and two-dimensional CCD sensor.
[Fig. 4]
   A figure of a field-of-view of a microscope showing a line-sensor imaging range and a laser-spot position.
[Fig. 5]
   A figure of a field-of-view of a microscope showing an imaging range of a line sensor and two-dimensional CCD sensor.
[Fig. 6]
   A flowchart showing a use procedure of the microscope apparatus.
[Fig. 7]
   An explanatory view showing an imaging range and sequence of line images within a measuring region.
[Fig. 8]
   A flowchart showing an adjusting procedure of a focal length and inclination for the sample.
[Fig. 9]
   An image figure showing a reflection shape of laser spot.
[Fig. 10]
   A flowchart showing an imaging procedure of a line image.
[Fig. 11]
   A flowchart showing a procedure for focal-length deviation amount adjustment.

### [Mode for Carrying Out the Invention]

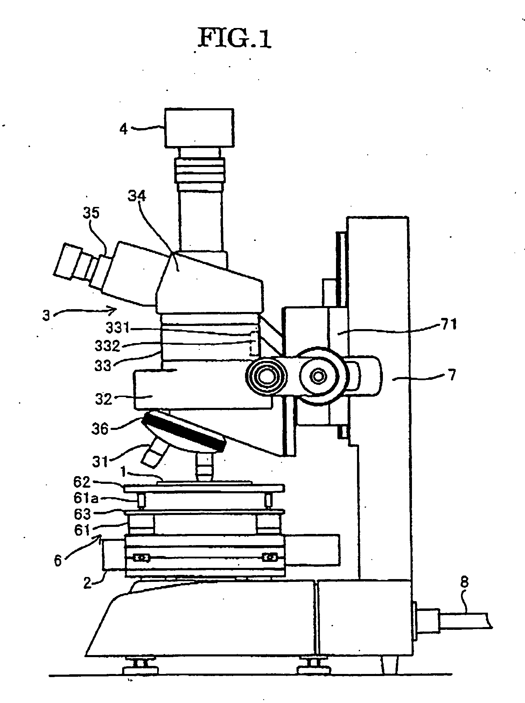

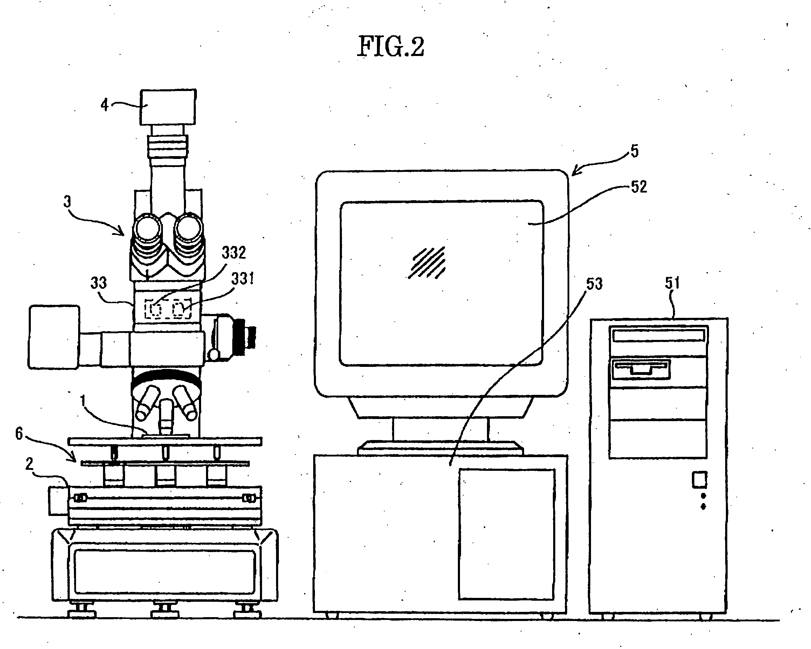

While referring to Figs. 1 to 3, a microscope apparatus according to the present invention will be explained with an embodiment used in a radiation track detector. The radiation track detector has a moving means 2 for moving a track-detecting solid matter 1 as a sample, a microscope 3 for magnifying the track-detecting solid matter 1, a line sensor 4 for imaging the magnified solid member for track detection as a line image, and determining means 5 for preparing an image of the solid member 1 for track detection from the line image and determining a radiation incident amount and incident direction from the image. Also, in the above of the moving means 2, there is provided a tilting table 6 as a support base for supporting the slid matter 1 for track detection and adjusting its inclination and focal length. The moving means 2 and the microscope 3 are respectively supported by a frame 7 in an L-form.

The moving means 2 is arranged on a horizontal part of the L-formed frame 7, to horizontally move the tilting table 6 placing thereon the track-detecting solid matter 1 in a direction of left/right and forward/backward by a linear motor. The linear motor is a known art that an armature moves over a permanent magnet arranged in a strip form, wherein high-speed drive, high responsibility and accurate positioning are possible. The linear motor is under remote control of a computer, as hereinafter referred, to move the track-detecting solid matter 1 to a predetermined position. Meanwhile, in the vicinity of the linear motor, an encoder is also provided, to feed back the movement amount of the tilting table 6 by the linear motor to the operation processing section 51.

Next, the microscope 3 is structured by an optical microscope, and structured with an objective lens 31, a lamp section 32 for illuminating the track-detecting solid matter, an auto-focusing AF unit 33, a lens barrel 34, and an eyepiece lens 35 for visual observation. These will be explained below in the order.

The objective lens 31 uses those of x10 and x20 which are to be manually changed from one to another by a revolver 36. In order to obtain clear-cut image, the lamp section 32 bends at a right angle, by a half mirror, the light from a halogen lamp, not shown, provided within the lamp section 32 to along an optical axis of the microscope 3 and illuminates it to the track-detecting solid matter 1, thus intensifying the reflection light from the track-detecting solid matter 1. Also, in order to allow illumination also at the back surface of the track-detecting solid matter 1, an optical fiber 8 is provided on the frame 7 which introduces the light from the not-shown halogen lamp externally provided. The auto-focusing AF unit 33 has a focus means 331 having a laser projecting means and a two-dimensional CCD sensor 332.

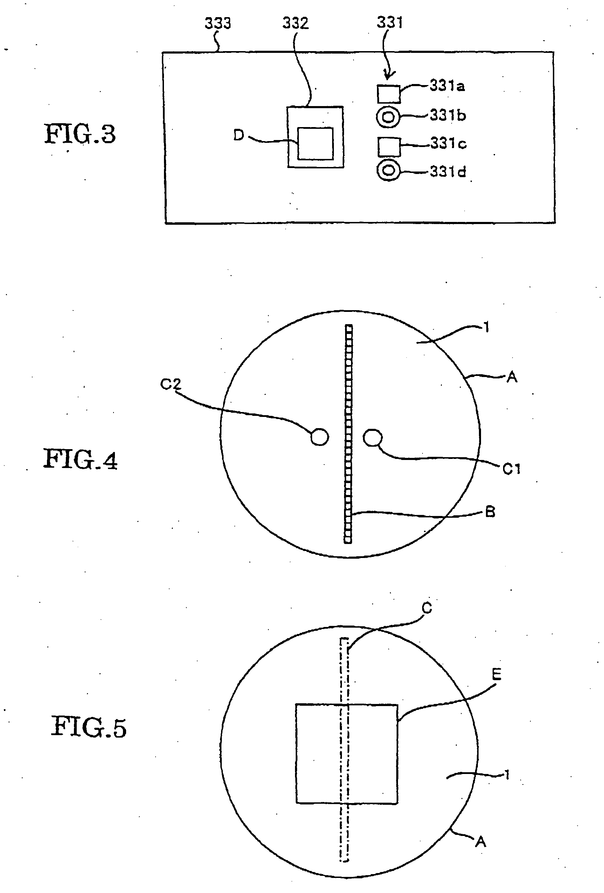

The laser projecting means, as shown in Fig. 3, has a forward light-projecting means having a laser-light projecting part 331b and a light-receiving section 331a, and a backward light-projecting means having a laser-light projecting part 331d and a light-receiving section 331c, which are respectively arranged on a printed board 333. The printed board 333 is attached on an inner wall surface of the AF unit 33. The laser light emitted from the light-projecting part 331b, 331d is bent rectangular by a lens system and half mirror along the optical axis of the microscope 3 and projected to the track-detecting solid matter 1. Its reflection light travels reverse the path and is detected at the respective light-receiving parts 331a, 331c.

The light-projecting position to the track-detecting solid matter 1 is set, as shown in Fig. 4, on an upper surface of the track-detecting solid matter 1 lying within a field of view A of the microscope 3 at nearby positions C1, C2 on the both sides of an imaging range B by the line sensor 4. Herein, the nearby position C1 is a light-projecting position of a laser light from the light-projecting part 331b of the forward light-projecting means, while the nearby position C2 shows a light-projecting position of a laser light from the light-projecting part 331d of the backward light-projecting means. Consequently, the laser reflection light from the track-detecting solid matter 1 can be positively prevented from entering a line screen to be imaged by the line sensor 4. Furthermore, the focal distance to the imaging range B can be measured as correctly as possible by a measurement at its vicinity. Incidentally, as hereinafter referred, the focusing means 331 having the two set of laser projecting means can swiftly adjust the inclination and focal length of the track-detecting solid matter 1. Meanwhile, the reason of providing two sets of laser projecting means is to use separately such that, when line images are sequentially imaged by the line sensor 4 while moving the track-detecting solid matter 1 in X direction as hereinafter referred, the nearby position C1 or the like for laser projecting is positioned in the forward of the imaged range B of the line images during movement in the left direction and right direction. Due to this, even if the line sensor is scanned alternately left and right in both directions, the focal length can be adjusted on the forward side of the range to be imaged by the line sensor, allowing for correct focal adjustment.

The two-dimensional CCD sensor 332 is planarly arranged with vertically, horizontally 600 × 600 = approximately 3.5 billion charge coupled devices that are used on the general CCD camera and have 21 micro-meters in one side, and attached on the printed board 333 shown in Fig. 3. The two-dimensional CCD sensor 332, as shown in Fig. 5, images the surface of the track-detecting solid matter 1 through the half mirror, in an imaging range E of the two-dimensional CCD image sensor 332 sandwiching the imaging range C of line images. Incidentally, the region D in Fig. 3 is an imaging surface D by the two-dimensional CCD sensor 332. As hereinafter referred, by imaging due to the two-dimensional CCD sensor 332, it is possible to designate an imaging region 11 of the track-detecting solid matter 1.

The lens barrel 34 supports an eyepiece lens 35 for visual observation and a line sensor 4. Furthermore, this lens barrel at a side part is attached on an upright part of the L-formed frame 7 through a rack-and-pinion mechanism 71. Accordingly, in the case that the track-detecting solid matter 1 is placed on the tilting table 6 or so, the microscope 3 itself can be manually moved up and down by the rack-and-pinion mechanism 71. Incidentally, the eyepiece lens 35 for visual observation is arranged to facilitate visual observation by inclining the optical axis of the objective lens 31.

Now, the line sensor 4 is accommodated in a case. This case is detachably attached to a tip of the lens barrel 34. Incidentally, the form of the attaching part adopts an F mount as a standard mounting form for the single-lens reflex camera as to the lens-mounting part. The line sensor 4 is structured by linearly arranging, one by one, approximately 4000 charge coupled devices having 7 micro-meters in one side. Consequently, in the case of an imaging magnification of ×10, it is possible to image, at one time, a range having a width of 7 micro-meter ÷ 10 = 0.7 micro-meter by a length of 7 micro-meter × 4000 pieces ÷ 10 = 2.8 millimeters. As hereinafter referred, the line sensor 4 images sequentially, based on the range, the track-detecting solid matter 1 being horizontally moved by the moving means 2, and delivers each of line image data to determining means 5, which will be next explained, through a coupling cord (not shown)

The determining means 5, using a commercially available computer or what is called a personal computer, is configured with an operation processing section 51, a display section 52, and a memory part 53 for recording line image data. The operation processing section 51 carries out, as hereinafter referred, setting of an imaging region on the track-detecting solid matter 1, movement of the moving means 2, adjustment of inclination of the tilting table 6 and focal length, image executing instruction of the line sensor 4 on the basis of a movement amount fed back from an encoder of the moving means 2, taking in the line image data imaged by the line sensor 4, preparing a whole image in the imaging region from the line image data, and determining a radiation incident amount and direction from the whole image.

Now, the tilting table 6 will be next explained. The tilting table 6 is structured with three ultrasonic motors 61 arranged in a manner configuring a regular triangle, a flat-formed table part 62 supported at three point of the vertical output shafts 61a of the ultrasonic motors, and a fixing member 63 fixing the mutual positions of the ultrasonic motors 61. In the present embodiment, the three ultrasonic motors 61 are provided as adjusting means for adjusting for inclination and vertical position of the tilting table 6. Incidentally, the vertical output shafts 61a, at tips, are in abutment against a cavity formed on a back surface of the table part 62, thereby preventing against mutual deviation in horizontal direction.

The ultrasonic motor 61, a known art, has an elastic member provided in abutment on a piezoelectric ceramics, which is to deform if applied by voltage. A ultrasonic region of voltage is applied to the piezoelectric ceramics to cause bending vibration on the elastic member, thereby rotating the output shaft. It has characteristics high in responsibility and controllability but small in operating noise or so. In the ultrasonic motor 61 used in the invention, the output shaft is made in a thread structure that the output shaft rotates for vertical movement. Incidentally, as hereinafter referred, the tilting table 6 adjusts for inclination and focal length of the track-detecting solid matter 1, under computer control based on the signal from the above-stated focusing means 331. Because focal-length adjustment is also done by the ultrasonic motor 61 through utilizing the ultrasonic motor 61 for adjusting the inclination of the tilting table 6, eliminated is the need of a separately providing driving means for focal-length adjustment.

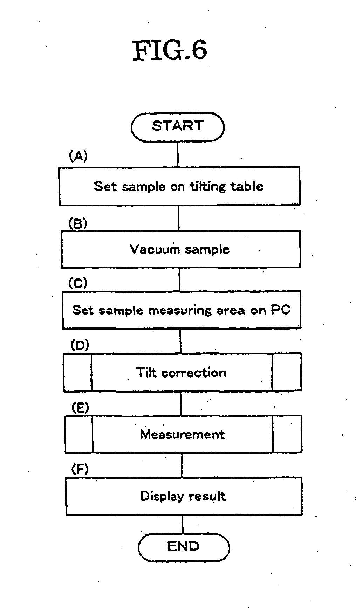

Now, while referring to Figs. 6 to 10, explanation will be made on the use of the radiation track detector according to the present invention. As shown in Fig. 6, a track-detecting solid matter 1 as a subject of radiation measurement is first set on the upper surface of the table part 62 of the tilting table 6 (A). Not to allow movement, this track-detecting solid matter is absorption-fixed or so on the table part by vacuum means or the like (B). Next, a measuring region 11 of the track-detecting solid matter 1 is set by an input from the personal computer (C).

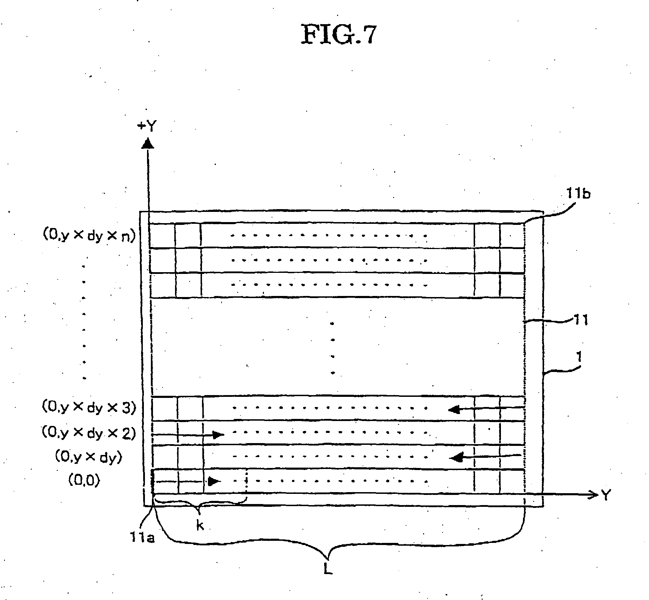

The measuring region 11 as shown in Fig. 7 is on the surface of the track-detecting solid matter 1, in a rectangular range where etch pit is to be actually imaged. The reason of designating a measuring region 11 is because, in the case that the track-detecting solid matter 1 is different in size, there is a need for imaging within a range not jutting out of the periphery of the track-detecting solid matter, and for setting a start point 11a and an end point 11b of a line image to be sequentially imaged by the line sensor 4. Although the measuring region 11 can be set while viewing the visual-observing eyepiece lens 35, operability can be by far improved rather by setting through displaying an image of the track-detecting solid matter 1 in a display part 52 of the computer.

In the meanwhile, in the present invention, because an image from the line sensor 4 is sent to the determining means 5 as hereinafter referred, it can be considered to display this image on the display section 52 and set a measuring region 11 while viewing the imaging screen. However, because each of line images taken by the line sensor 4 has a width in an extreme narrow range of 0.7 micro-meter as described above, it is difficult to confirm a peripheral part of the track-detecting solid matter 1. Accordingly, it is practically impossible to set a measuring region 11 not jutting out at the periphery of the solid matter 1 of track detection. Accordingly, in the present invention, a measuring region 11 is to be set by a two-dimensional CCD sensor 332 capable of imaging two-dimensional broadening to a certain extent.

Setting a measuring region 11 is made by moving/adjusting the moving means 2 in XY directions according to an instruction from the input means 53 of the personal computer while viewing an imaging screen on which the region of an imaging region E (see Fig. 5) of the two-dimensional sensor 332 is projected. Namely, by the two-dimensional CCD sensor 332 projected is a periphery of a position 11a at around a corner in one end on a diagonal line of a rectangular track-detecting solid matter 1 shown in Fig. 7, to set an imaging start point by the line sensor 4. Next, projected is a periphery of a position 11b at around a corner in the other end on the diagonal line, to set an imaging end point. The points are recognized by the personal computer. Due to this, the XY coordinate of the point 11a, 11b is recorded as the information corresponding to a movement start point and end point of a linear motor of the moving means 2, to the operation processing section 51 of the personal computer. Accordingly, as hereinafter referred, in the case of imaging by the line sensor 4, by an instruction from the operation processing section 51, the linear motor of the moving means 2 is sequentially moved from the inward position 11a as a first imaging position to the horizontal position 11b as a last imaging position.

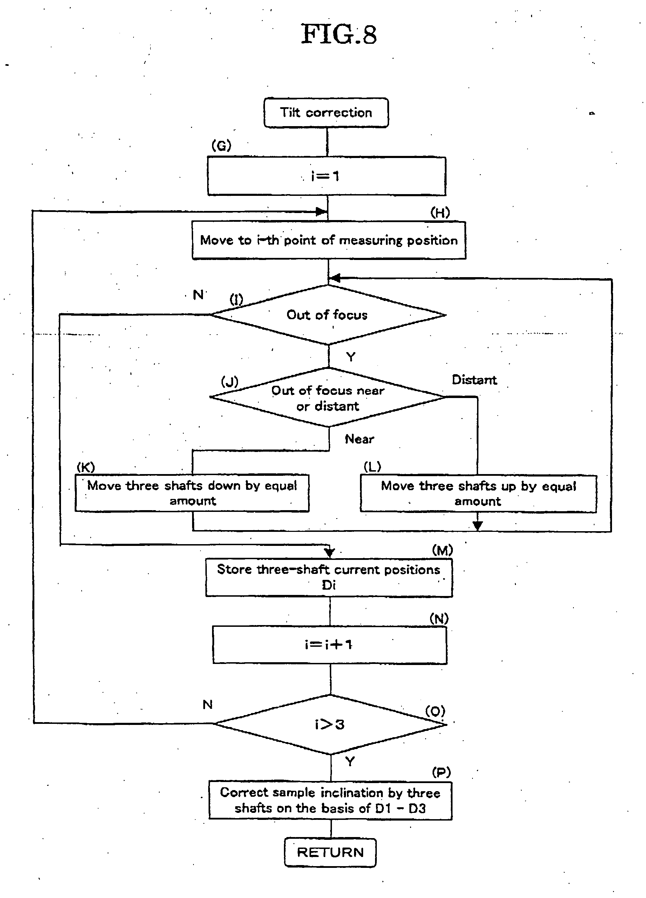

After ending the setting of a measuring region 11 (C), adjustment is then made for focal length and inclination of the track-detecting solid matter 1 (D). This adjustment is automatically done by the procedure shown in Fig. 8 according to an instruction from the operation processing section 51 of the personal computer, on the basis of the information from the focusing means 331 having the laser projecting means provided on the AF unit 33. Herein, explanation is made on the reason why the adjustment for inclination and focal length of the track-detecting solid matter 1 is carried out by the focusing means 331 having the light projecting means. Namely, as stated above, the present invention has the line sensor 4 and the two-dimensional CCD sensor 332 mounted on the AF unit 33. Accordingly, it can be considered that, focal length is automatically set by these sensors as in the usual CCD camera.

However, this means has involved the following problem. In focal length automatic setting of the usual CCD camera using a two-dimensional sensor 332, a focal position where the imaging is in the greatest sharpness, i.e. contrast is strong, is set as a focal position. Consequently, when making a focal adjustment by the two-dimensional CCD sensor 332, there is a need to examine a maximum contrast value by examining around a focal point in order to find out a strongest contrast position. However, the line sensor 4 makes imaging in an extremely narrow width range, there is a difficulty in detecting an image contrast. Also, because of the necessity to examine around a focal point, there is a disadvantage that it takes a time in focal adjustment. Consequently, the present invention adopts laser-projecting focusing means 331 capable of measuring a focal length with extreme accuracy and at high speed.

Now, referring back to Fig. 8, explanation will be made on the adjusting procedure for inclination of the track-detecting solid matter 1. This adjustment is controlled according to a program incorporated in the operation processing section 51 of the personal computer. The operation processing section 51 at first sets a central part of the measuring region 11 on the track-detecting solid matter 1 as a measuring point i = 1 (G), to move the moving means 2 such that the optical axis of the microscope 3 coincides with an XY coordinate position thereof (H). At this position, a laser spot is projected from the light projecting part 331b, 331d, to determine whether or not the distance to the track-detecting solid matter 1 deviates with respect to a proper focal length (I).

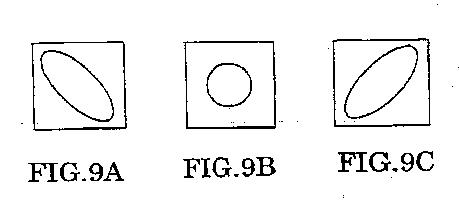

The deviation with respect to a proper focal length is determined from a shape of the reflection light incident on the light-receiving means 331a, 331c. Namely, the shape of the reflection light is circular as shown in Fig. 9B when in a proper focal length. In the case of being closer than a proper focal length, it is deformed leftward oblique as in Fig. 9A, while, in the case of being farther than a proper focal length, it is rightward oblique as in Fig. 9C. Accordingly, the operation processing section 51 recognizes a form of the reflection light incident on the light-receiving section 331a, 331c. In the case there is a deviation in focal length, determination is made whether the distance is longer (farther) or shorter (closer) than the proper focal length (J). In the closer case, the output shafts 61a of the three ultrasonic motors 61 of the tilting table 6 are lowered by the same amount and aligned to the proper focal length (K). Conversely, in the farther case, the output shafts 61a of the three ultrasonic motors 61 of the tilting table 6 are raised by the same amount and aligned to the proper focal length (L). By the above, the measuring point i = 1 is set to the proper focal length position (M).

Next, the deviation of focal length of the two measuring points (i = 2, 3) is measured similarly. Namely, the operation measuring section 51 sets a second measuring point i = 2 which is distant by a predetermined distance from the measuring point i = 1 (N), to move the moving means 2 such that the optical axis of the microscope 3 coincides with the XY coordinate position thereof (H). At this position, a laser spot is projected, to calculates and record a deviation amount between the measurement distance and the proper focal length (M) by a similar means to that described above. The operation measuring section 51 sets a third measuring point i = 3 which is distant by a predetermined distance from the measuring point i = 1, to move the moving means 2 to the XY coordinate position thereof (H). Similarly to the above, a deviation amount between the measurement distance and the proper focal length is calculated and recorded (M). Incidentally, after measurement at the measuring point i = 3, the measurement of focal length is ended by a determining equation i > 3 (O).

By the above, because of a revealed deviation amount from the proper focal length in the respective XY coordinate positions at three measuring points i = 1, 2 and 3, an inclination in XY direction of the track-detecting solid matter 1 is geometrically calculated from this three-dimensional coordinate position, making it possible to calculate respective vertical adjusting amounts of the output shafts 61a of the three ultrasonic motors 61 required for correcting the deviation amount. The operation processing section 51 adjusts a draw-out amount of the output shafts 61a of the three ultrasonic motors 61 on the basis of the calculation result, thus adjusting the inclination amount (P).

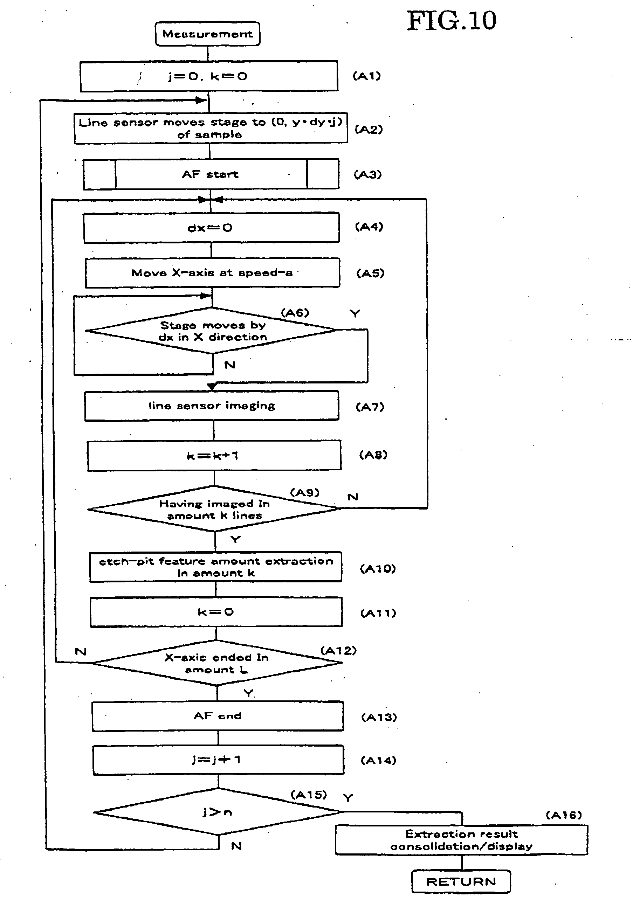

As in the above, when the tilting table 6 is moved by the moving means 2, the surface of the imaging section of the track-detecting solid matter 1 becomes horizontal. Next, explanation will be made on the procedure to image the track-detecting solid matter 1 by the line sensor 4, while referring to Fig. 10. This imaging is controlled according to a program incorporated in the operation processing section 51 of the personal computer. The operation processing section 51 at first sets a measuring position j = 0, k = 0 by an encoder (A1), and recognizes this measuring position j = 0 as a coordinate X = 0, Y = 0 (0, dy × j). The track-detecting solid matter 1 is moved to this XY coordinate (0, 0) by the moving means 2 (A2). This XY coordinate (0, 0) position is the lower left corner 11a in the measuring region 11 shown in Fig. 7, which point is a start point for starting imaging.

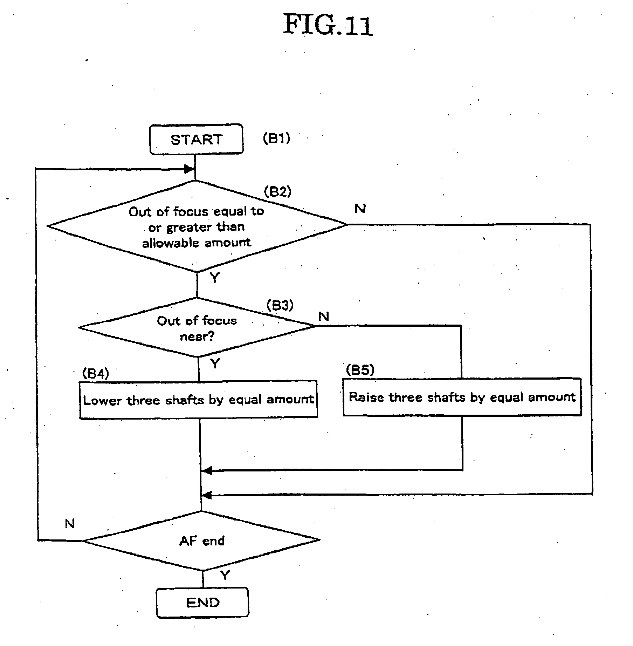

Now, in case a start point of imaging position is set at the lower left corner 11a of the measuring region 11, the operation processing section 51 makes a focal adjustment (focal-length adjustment) by the focusing means 331. In case of being out of focus, the three ultrasonic motors 61 are driven by the same amount to carry out focal adjustment (A3). Namely, as shown in Fig. 11, focal adjustment is started (B1). The operation processing section 51 determines, from the information obtained from the focusing means 331, whether the out-of-focus amount is equal to or greater than an allowable amount (B2). Assume that the out-of-focus amount is equal to or greater than an allowable amount. In the case of the deviation being near (B3), the output shafts 61a of the three ultrasonic motors 61 of the tilting table 6 are lowered by the amount corresponding to the deviation (B3), thus being adjusted to the proper focal length. Conversely, in the case of the deviation being far, the output shafts 61a of the three ultrasonic motors 61 of the tilting table 6 are raised by the amount corresponding to the deviation (B5). Then, an X-axis moving amount dx = 0 is set (A4), to record a line image taken by the line sensor 4 in the measuring position (0, 0), and the moving means 2 is started to move at a constant speed in the X direction (A5). The moving amount of the moving means 2 is measured by the encoder and the data is sent to the operation processing section 51. When the operation processing section 51 determines that the moving means 2 has moved the measuring region 11 by one measuring width of line sensor 4 in the X direction (A6), similarly recorded is a line image of the line sensor 4 in a second measuring position (1dX, 0). The operation processing section 51 adds 1 to k each time recording is made by one line (A8). The operation processing section 51 sequentially records line images, concerning a range of one column having an X-direction length L, until the moving means 2 moves at a constant speed in the X direction and the measuring position comes to the lower right corner of the measuring region 11 shown in Fig. 7.

In the case the line image has been recorded in an amount of k lines, or 25% of the length L in the X direction (corresponding to the region k of Fig. 7) (A9), the operation processing section 51 carries out an etch-pit feature amount extraction in an amount of the region k concurrently with line image recording (A10). After etch-pit extraction, k is set to k = 0 (A11). The etch-pit feature amount extraction is carried out as follows; the operation processing section 51 recognizes an etch-pit form in an image within the region k, collates and compares it with a previously recoded etch-pit pattern to determine an etch-pit kind to thereby totalize and record the kind-based quantity. Namely, the operation processing section 51, while recording the line image in a length L in X direction, carries out etch-pit feature amount extraction, each time data in 25% of the length L is inputted, depending upon the inputted data concurrently with line-image recording operation. Accordingly, when ending the scanning over a range of one column having a length L, etch-pit feature amount extraction is carried out four times.

When taking in the data imaged at the lowest stage of the measuring range 11, i.e. Y = 0, is completed (A12), the operation processing section 51 ends the focus adjusting operation (A13), and sets j = 1 to the encoder (A14) and causes the moving means 2 to move the measuring position to a position of XY coordinate = L, Y = dY (L, dY × j). This position is a position that is rightward by L in X direction from the lower left corner 11a of the measuring region 11 shown in Fig. 7 and moved by a length of line sensor 4 in Y direction. Then, in a position of Y coordinate = dY, line images are sequentially taken from a right end to left end of the measuring region 11. In this manner, while sequentially changing the scanning direction of line images from right to left or from left to right, the operation processing section 51, at an instant the line sensor 4 moves to a new imaging range, records line images sequentially together with measuring coordinate. Reaching j > n (A15), the operation processing section 51 determines that the entire region of the measuring range has been imaged, and causes the display section 52 to display a consolidation of extraction result and display of entire region (A16).

Incidentally, in the above successive imaging, the deviation from a focal length is checked each time by the foregoing procedure (what is called focal adjustment). In the case there is a deviation of an allowable amount or greater, focal-length adjustment is done. In the meanwhile, the line sensor sequentially takes line-images when the image range moves to left or right by one as noted above. Accordingly, the focal-length adjustment of a line image to be taken must be previously completed before taking the line image, i.e. before the imaging range ends moving. In order to realize this, the laser spot shown in Fig. 4 must be projected, at all times, to a preceding position to the imaging range B of moving line image. For example, in the case that the imaging range B of line image moves rightward, there is a need to project a laser spot to a rightward vicinity position C1 of this imaging range B. In the case that the imaging range B of line image moves leftward, there is a need to project a laser spot to a leftward vicinity position C2 of this imaging range B.

In the meanwhile, as stated above, in case the line image due to the line sensor 4 is completed of imaging by one column in X direction, the track-detecting solid matter 1 is moved in an amount of line-sensor length in Y direction by the moving means 2, again repeating the imaging one column in X direction. In this case, if the movement in X direction is always in the same direction, e.g. from left to right, there is a need for operation, on each column, to return the track-detecting solid matter 1 to the left end. Accordingly, swift imaging is made possible by changing the X-direction moving direction based on each column into a zigzag movement, e.g. movement of from right to left next to the movement of from left to right.

In the case of zigzag movement like this, there is a necessity to change a laser-spot projecting position depending upon an advancing direction thereof, as stated above. However, the change of laser-spot projecting position by a set of light-projecting and light-receiving section requires an extremely complicated switching structure. For this reason, the invention adopts two sets of light-projecting sections 331b, 331d and light-receiving sections 331a, 331c thereby employing a structure of separate use for a change in advancing direction.

Incidentally, the structure of the line sensor 4 is not limited to the case of arranging CCDs, one by one, in the number of approximately 40000, but several in each may be arranged further longer. Also, the smaller size of each pixel of the line sensor 4 can take an image with the higher resolution. However, in the case of using a greater size of pixels, by increasing the magnification of imaging, image can be taken with excellent resolution. Determining an etch-pit kind, totalizing the kind-based quantities and the like, considering the reduction of process time, is desirably conducted by a procedure to carry out based on a predetermined range of a measuring region 11 as stated above, e.g. based on a 25% part of a one column range having a length L, for final totalizing. However, it is possible to carry out in batch after obtaining an image by one column range or obtaining a line image over the entire range of a measuring range 11.

Meanwhile, it can be easily structured to display a taken image from the two-dimensional CCD sensor 332 or laser-spot reflection image on the display section 53, so that the moving means 2 or tilting table 6 can be adjusted by manual input from the input means 52 while viewing the display screen.
Incidentally, the two-dimensional CCD sensor 332 is not limited to this but may be a solid-state imaging device such as a CMOS sensor.

### [Effect of the Invention]

Because a light projecting position of light-projecting means is provided in the vicinity of a range of imaging by a line sensor, focal adjustment is correctly made upon taking an image by the line sensor. Also, when providing two light projecting means of a forward light projecting means and a backward light projecting means, even if the line sensor is scanned bi-directionally alternately left and right, focal adjustment is possible at a frontward of the imaging range by the line sensor. Thus, focal adjustment is correctly done.

Also, because focal length is adjusted by the adjusting means for adjusting an inclination of the support base, there is no need to provide two adjusting means for inclination adjustment and focal adjustment, thus making the structure simple. Due to this, precise image can be swiftly taken by the simple structure.

Also, there are provided both the line sensor and the two-dimensional CCD sensor. By the line sensor, sample imaging can be swiftly made. By using the two-dimensional CCD sensor capable of taking an image of two-dimensional spread, an in-sample imaging range can be swiftly and easily set.

## Claims

1. A microscope apparatus comprising: a microscope (3) comprising a line sensor (4) for imaging a sample (1) ;
image processing means (5) for making an image of the sample (1) from the line image data (B) taken by the line sensor (4);
wherein the microscope (3) has focusing means having light-projecting means (331);
the focusing means (331) providing a projection position (c1, c2) on the sample (1) in a vicinity of a range to be imaged by the line sensor (4).

2. A microscope apparatus according to claim 1 **characterized in that** the light-projecting means (331) is configured such that the projection position (c1, c2) is in the front of the line image (B) taken by the line sensor (4) when the sample moves relative to the microscope apparatus.

3. A microscope apparatus according to claim 1 wherein the light-projection means (331) comprises a forward light projection means (331 a, 331 b) for projecting light such that the projection position (c1) on the sample (4) is in front of the line image (B) taken by the line sensor (4) when the sample (1) moves relative to the microscope (3) in one direction and a backward light-projecting means (331c, 331 d) for projecting light to a projection position (c2) which is positioned behind the line image (B) taken by the line sensor (4) when the sample (1) moves in the same direction.

4. A microscope apparatus according to one of claims 1 to 3 further comprising:
a support base (6) for supporting the sample (1); and wherein
the microscope (3) is configured for magnifying the sample (1);
the line sensor (4) is configured to image the magnified sample as a line image; and
the support base (6) comprises adjusting means (61) for adjusting an inclination thereof and a focal length of the microscope (3).

5. A microscope apparatus **characterized in that**, in claim 4, the adjusting means (61) adjusts vertical positions at least in three points of the support base (6).

6. A microscope apparatus **characterized in that**, in either of claim 4 or 5, the adjusting means (61) is controlled by a signal from the focusing means (331).

7. A microscope apparatus according to one of claims 1 to 6 further comprising:
a two-dimensional charge coupled device (332) for imaging an imaging position of the line sensor (4).

## Patentansprüche

1. Mikroskopvorrichtung, die umfasst:
ein Mikroskop (3), das einen Zeilensensor (4) zum Abbilden einer Probe (1) umfasst;
eine Bildverarbeitungseinrichtung (5), die ein Bild der Probe (1) aus den durch den Zeilensensor (4) erfassten Zeilenbilddaten (B) erzeugt;
wobei das Mikroskop (3) eine Fokussiereinrichtung mit einer Lichtprojektionseinrichtung (331) aufweist;
die Fokussiereinrichtung (331) eine Projektionsposition (c1, c2) auf der Probe (1) in einer Nähe eines durch den Zeilensensor (4) abzubildenden Bereiches schafft.

2. Mikroskopvorrichtung nach Anspruch 1, **dadurch gekennzeichnet, dass** die Lichtprojektionseinrichtung (331) so konfiguriert ist, dass die Projektionsposition (c1, c2) vor dem durch den Zeilensensor (4) erfassten Zeilenbild (B) liegt, wenn sich die Probe relativ zu der Mikroskopvorrichtung bewegt.

3. Mikroskopvorrichtung nach Anspruch 1, wobei die Lichtprojektionseinrichtung (331) eine Vorwärts-Lichtprojektionseinrichtung (331 a, 331 b), die Licht so projiziert, dass die Projektionsposition (c1) auf der Probe (4) vor dem durch den Zeilensensor (4) erfassten Zeilenbild (B) liegt, wenn sich die Probe (1) relativ zu dem Mikroskop (3) in einer Richtung bewegt, und eine Rückwärts-Lichtprojektionseinrichtung (331c, 331d) umfasst, die Licht auf eine Projektionsposition (c1) projiziert, die hinter dem durch den Zeilensensor (4) erfassten Zeilenbild (B) angeordnet ist, wenn sich die Probe (1) in der gleichen Richtung bewegt.

4. Mikroskopvorrichtung nach einem der Ansprüche 1 bis 3, die des Weiteren umfasst:
einen Trägeruntersatz (6), der die Probe (1) trägt; und wobei
das Mikroskop (3) zum Vergrößern der Probe (1) konfiguriert ist;
der Zeilensensor (4) so ausgeführt ist, dass er die vergrößerte Probe als ein Zeilenbild abbildet; und
der Trägeruntersatz (6) eine Einstelleinrichtung (61) zum Einstellen einer Neigung desselben und einer Brennweite des Mikroskops (3) umfasst.

5. Mikroskopvorrichtung nach Anspruch 4, **dadurch gekennzeichnet, dass** die Einstelleinrichtung (61) vertikale Positionen an wenigstens drei Punkten des Trägeruntersatzes (6) einstellt.

6. Mikroskopvorrichtung nach Anspruch 4 oder 5, **dadurch gekennzeichnet, dass** die Einstelleinrichtung (61) durch ein Signal von der Fokussiereinrichtung (331) gesteuert wird.

7. Mikroskopvorrichtung nach einem der Ansprüche 1 bis 6, die des Weiteren umfasst:
ein zweidimensionales CCD-Element (332) zum Abbilden einer Bilderzeugungsposition des Zeilensensors (4).

## Revendications

1. Dispositif de microscopie comprenant : un microscope (3) comprenant un capteur de ligne (4) destiné à mettre en image un échantillon (1) ;
des moyens de traitement d'image (5) destinés à créer une image de l'échantillon (1) à partir des données d'image de ligne (B) prises par le capteur de ligne (4) ;
dans lequel le microscope (3) comprend des moyens de focalisation comportant des moyens de projection de lumière (331) ;
les moyens de focalisation (331) fournissant une position de projection (c1, c2) sur l'échantillon (1) à proximité d'une plage devant être mise en image par le capteur de ligne (4).

2. Dispositif de microscopie selon la revendication 1, **caractérisé en ce que** les moyens de projection de lumière (331) sont configurés de sorte que la position de projection (c1, c2) est à l'avant de l'image de ligne (B) prise par le capteur de ligne (4) lorsque l'échantillon se déplace par rapport au dispositif de microscopie.

3. Dispositif de microscopie selon la revendication 1, dans lequel les moyens de projection de lumière (331) comprennent des moyens de projection de lumière vers l'avant (331a, 331b) destinés à projeter la lumière de sorte que la position de projection (c1) sur l'échantillon (4) est à l'avant de l'image de ligne (B) prise par le capteur de ligne (4) lorsque l'échantillon (1) se déplace par rapport au microscope (3) dans un sens et des moyens de projection de lumière vers l'arrière (331c, 331d) destinés à projeter la lumière vers une position de projection (c2) qui est positionnée derrière l'image de ligne (B) prise par le capteur de ligne (4) lorsque l'échantillon (1) se déplace dans le même sens.

4. Dispositif de microscopie selon l'une des revendications 1 à 3 comprenant en outre :
une base de support (6) destinée à supporter l'échantillon (1) ; et dans lequel
le microscope (3) est configuré pour grossir l'échantillon (1) ;
le capteur de ligne (4) est configuré pour mettre en image l'échantillon grossi comme une image de ligne ; et
la base de support (6) comprend des moyens d'ajustement (61) destinés à ajuster une inclinaison de celle-ci et une longueur focale du microscope (3).

5. Dispositif de microscopie **caractérisé en ce que**, à la revendication 4, les moyens d'ajustement (61) ajustent des positions verticales au moins en trois points de la base de support (6).

6. Dispositif de microscopie **caractérisé en ce que**, à la revendication 4 ou 5, les moyens d'ajustement (61) sont commandés par un signal provenant des moyens de focalisation (331).

7. Dispositif de microscopie selon l'une des revendications 1 à 6, comprenant en outre :
un dispositif à couplage de charge bidimensionnel (332) destiné à mettre en image une position de mise en image du capteur de ligne (4).
